# EUROPEAN PATENT SPECIFICATION

(11) **EP 1 707 059 B1**
(45) Date of publication and mention of the grant of the patent: **28.07.2010**
(21) Application number: 05252093.9
(22) Date of filing: 02.04.2005
(51) Int. Cl.: A23K 1/16, A23K 1/18

(54) **Animal feed composition for improving colostrum**
Tierfutterzusammensetzung zur Verbesserung von Kolostrum
Composition de nourriture pour animaux pour améliorer le colostrum

(43) Date of publication of application: 04.10.2006
(73) Proprietor: Uniblock Limited, Dundalk, Co. Louth (IE)
(72) Inventor: Warren, Thomas George Martin,, Dundalk, Co.Louth (IE); Hunter, Grant James,, Burton-on-Trent, Staffordshire DE13 0DW (GB)
(74) Representative: Blower, Timothy John

(56) References cited:
- EP-A- 1 483 974
- WO-A-95/17103
- WO-A-98/04153
- US-A1- 2005 008 679
- FRANKLIN, S. T., NEWMAN, M. C., NEWMAN, K. E., AND MEEK, K. I.: "Immune parameters of dry cows fed mannan oligosaccharide and subsequent transfer of immunity to calves" JOURNAL OF DAIRY SCIENCE., vol. 88, February 2005 (2005-02), pages 766-775, XP002340357 USAMERICAN DAIRY SCIENCE ASSOCIATION. CHAMPAIGN, ILLINOIS.
- WINDSCHITL, P. M., AND SCHINGOETHE, D. J.: "Microbial protein synthesis in rumens of cows fed dried whole whey" JOURNAL OF DAIRY SCIENCE., vol. 67, 1984, pages 3061-3068, XP008050918 USAMERICAN DAIRY SCIENCE ASSOCIATION. CHAMPAIGN, ILLINOIS.

## Description

The present invention relates to an animal feed composition, particularly but not exclusively an animal feed composition for ruminant animals.

Colostrum is the first milk produced by post parturient animals and is considered essential for the future wellbeing and health of the newly born animal. It has a high level of several nutrients important for the health and performance of the newborn animal such as fat, protein, trace elements, laxatives, trypsin inhibitors and buffering agents. Colostrum also contains a high concentration of antibodies against a variety of infectious agents.

Immediately after birth, the newborn animal is exposed to a variety of infectious agents, and without any protection from these infectious agents the newborn animal may become diseased or die. Newborn calves or lambs do not carry any antibodies against infection, because antibodies in the mother's bloodstream do not cross the placenta. These antibodies are however concentrated in the colostrum and provide a natural and efficient source of protection against many intestinal, respiratory and other diseases.

It is critical that lambs and calves receive colostrum during the first 24 hours of life in order to ensure adequate absorption of the antibodies. Antibodies are large protein molecules that can cross the intestinal wall and enter the bloodstream of the lamb or calf only during the first 24 - 36 hours of life. Absorption of these antibodies is most efficient in the first few hours after birth. Within 4 days all but a tiny fraction of antibody is absent from the mother's milk as it reverts to a standard form. Failure to receive adequate quantities of high quality colostrum renders an animal prone to disease and mortality rates are high among animals that receive little or none of this passive immunity.

Research has shown that the quantity and quality of colostrum produced by the mother varies greatly. Improving both the quantity and quality of colostrum leads to stronger, healthier young animals which are less susceptible to infection and disease. The options for improving colostrum are based on either vaccination or nutritional manipulation.

Vaccination involves the injection of females 4 - 6 weeks before parturition with an antigen of specific bacteria or viruses to create an immune response and antibody production which can then be conferred to the newly born through colostrum. For example, ewes are vaccinated against enterotoxaemia and tetanus prior to lambing, so that antibodies against these diseases will then be contained in the colostrum. Vaccination is however relatively costly and time consuming. In some cases vaccination injections need to be given twice, and each animal must be handled individually.

In assessing how to improve colostrum by nutritional manipulation, the digestive processes of ruminants must be taken into account. In the ruminant digestive process, food is firstly taken into the first stomach chamber or rumen. The breakdown of ingested food is achieved by two principal means, namely physical and chemical breakdown. Physical breakdown is facilitated through the action of chewing and rumination. Chemical breakdown is facilitated by the activity of micro organisms which populate the rumen. Food entering the rumen is partially fermented for microbial use. This activity relies on soluble nitrogenous compounds and fermentable energy sources which the rumen micro organisms use as nutrient sources to maintain microbial activity and replication. The microbial cells which make up the principal protein supply to the host animal, along with undegraded food particles, pass to the abomasum and intestines, where they are digested by enzymes. The products of digestion are absorbed for host animal metabolic processes.

Food which passes through the rumen without being degraded is referred to as "protected", "digestible undegradable", "rumen undegradable" or "bypass". For instance, it is known that in the case of highly productive dairy cows, the metabolisable protein requirement exceeds the capacity of rumen micro organisms to produce microbial protein in the rumen. Protected protein is therefore added to the diet of the cow, and has been shown to improve milk yield and milk protein production.

Similarly, the use of supplementary protected proteins and fats has been found to increase the volume of colostrum produced. However, antibody production is not increased by the use of these supplements and therefore the actual concentration of antibody in the colostrum is diluted.

Any factor which adversely affects rumen function and the subsequent potential metabolisable protein supply to the host animal can result in both poor milk yield and quality, with particular emphasis being placed on colostrum quality.

Franklin, S. T., Newman, M. C., Newman, K. E., and Meek, K. I.: "Immune parameters of dry cows fed mannan oligosaccharide and subsequent transfer of immunity to calves" Journal Of Dairy Science., vol. 88, February 2005 (2005-02), pages 766-775, XP002340357, American Dairy Science Association, Champaign, Illinois discloses the use of mannan oligosaccharide in improving colostrum.

Windschitl, P. M., and Schingoethe, D. J.: "Microbial protein synthesis in rumens of cows fed dried whole whey" Journal Of Dairy Science., vol. 67, 1984, pages 3061-3068, XP008050918, American Dairy Science Association, Champaign, Illinois discloses the addition of lactose in cattle feed.

EP 1 483 974 (Yukiguni Maitake Co., Ltd) discloses a feed composition including mannan oligosaccharide suitable for various animals, including chickens, swine, as well as ruminants such as cattle.

US 2005/0008679 A1 (Bedding Peter M.J et al) discloses a feed composition for equine foals, also including mannan oligosaccharide.

WO 98/04153 A (Purina Mills, Inc) discloses a feed composition including protected protein which permits a lower crude protein intake while maintaining the milk yield of ruminants.

However, none of the above mentioned documents disclose a composition which both stimulates the production of antibodies, while maintaining or increasing the amount of colostrum produced.

In this specification, all percentages given are by weight.

According to the present invention, there is provided a ruminant colustrum improving feed composition for feeding to pregnant animals as defined in claim 1.

Other possible features of the composition are as defined in claims 2 to 6.

Further according to the present invention, there is provided a method of feeding a ruminant animal as defined in claim 7.

Other possible features of the method are as defined in claims 8 to 11.

Still further according to the present invention, there is provided a use of a composition in improving colostrum from a ruminant animal as defined in claim 12.

An embodiment of the present invention will now be described by way of example only.

| Table 1: Composition Formulation | |
|---|---|
| Ingredient | % |
| Mannan oligosaccharide | 1-3% |
| Lactose | 1-10% |
| Protected protein | 7-14% |
| Other ingredients | 71-90% |

Table 1 shows an example of a formulation of an animal feed composition for ruminant animals, and in particular a composition for feeding to pregnant cows and sheep.

The composition includes a first ingredient in the form of a mannose sugar such as mannan oligosaccharide. The mannan oligosaccharide is present in the composition in a proportion between 1 and 3%.

Mannan oligosaccharide is a yeast extract which stimulates the immune system to increase the amount of antibodies circulating in the bloodstream and the transfer of antibodies to colostrum. Mannan oligosaccharide works by adhering to pathogens in the small intestine and introducing them to Peyer's patches on the intestinal wall for antibody production. Mannan oligosaccharide also triggers heightened antibody production after absorption.

The composition includes a second ingredient in the form of lactose, which is present in a proportion between 1 and 10% of the composition. Lactose increases dry matter intake and the production of microbial protein from the rumen.

The composition includes a third ingredient in the form of a protected protein. In one example, the protected protein includes Sopralin® (a registered trade mark of Trouw (U.K.) Limited). Sopralin is a protected protein derived from soya bean meal. The protected protein passes through the rumen undegraded, thereby increasing the amount of protein available for digesting in the other stomach compartments and the intestine. The proportion of protected protein in the composition is between 7 and 14%.

A number of other ingredients make up the remaining 71 - 90% of the composition. In one example, the other ingredients are those ingredients which can be found in a high energy feed formulation, including molasses, protected oils, soya bean meal, minerals, and protected minerals.

The composition could be formed into a molassed meal or a pressed block. In the case of the pressed block, the animal consumes the composition by licking.

In use, pregnant cows or ewes are provided with access to the composition during the last six weeks of pregnancy. When the composition is in the form of a block, free access can be provided. In the case of ewes, the consumption rate should be between 100 and 200g per day and optimally approximately 150g per day. In the case of cows, the consumption rate should be between 150 and 250g per day, and optimally approximately 200g per day.

Trials have been carried out to determine the effect of the composition upon the quantity and quality of colostrum. In one trial, 200 ewes were divided into two groups four weeks prior to lambing. One group were offered silage and had access to a high energy feed supplement. Prior to lambing the ewes were turned out to grass where they continued to have access to the high energy feed supplement. The second group were also offered silage and had access to a composition in accordance with the invention. Prior to lambing the ewes were turned out to grass where they continued to have access to the composition.

Both groups of ewes were milked after lambing and a sample of the colostrum from each ewe sent for IgG analysis. IgG is the main type of antibody found in colostrum and is responsible for passive immunity.

Colostrum from the first group of animals was found to contain on average 182.9 IgG units per mg/L of colostrum. The second group of animals whose feed had been supplemented with the composition had 228.5 IgG units per mg/L of colostrum. The standard error of difference between these results is 16.79 and the level of significance .007.

The trial results show that consumption of the composition during the final weeks of pregnancy had resulted in an increase in concentration in antibodies in the colostrum.

The three main ingredients of the composition act together beneficially to produce the increase in concentration of the antibodies. The mannan oligosaccharide stimulates the production of antibodies, and in particular stimulates the production of IgG antibodies so that the amount of antibodies and in particular the amount of IgG antibodies in the colostrum is increased. The lactose and protected protein increase the amounts of protein available to the pregnant animal for metabolisation into antibodies.

A feed composition having only an ingredient which stimulated the production of antibodies could result in smaller quantities of colostrum being produced. A feed composition including ingredients which increase the availability of protein but which does not include an ingredient which stimulates the production of antibodies could increase the amount of colostrum, but that colostrum may have a lower concentration of antibodies.

In contrast, the composition of the invention has an ingredient which stimulates the production of antibodies and other ingredients which increase the availability of protein, so that the quantity of the colostrum is maintained or increased, and the concentration of antibodies in that colostrum is increased. Such colostrum is beneficial to the newborn animal, providing increased disease resistance.

In comparison with vaccination, the composition is easy to administer and does not require time consuming labour input.

The composition could be provided in any suitable form. The composition could include any other suitable ingredients. The composition could be provided for any ruminant animal.

There is thus provided a composition which can be easily administered to pregnant animals, and results in an improved quantity and quality of colostrum, the colostrum having an increased concentration of antibodies, which in turn results in healthier, more disease resistant young animals.

## Claims

1. A ruminant colustrum improving feed composition for feeding to pregnant animals, the composition including a first ingredient which in use stimulates the production of antibodies, the first ingredient including mannan oligosaccharide, the composition including another ingredient which in use increases the availability of protein, the other ingredient including a second ingredient which in use increases the amount of microbial protein produced by the animal, the second ingredient including lactose, **characterised in that** the other ingredient includes a third ingredient, which in use increases the amount of protein available for digestion after the rumen, the third ingredient including a protected protein.

2. A composition according to claim 1, **characterised in that** the proportion of mannan oligosaccharide in the composition is between 1 % and 3%.

3. A composition according to claims 1 or 2, **characterised in that** the proportion of lactose in the composition is between 1% and 10%.

4. A composition according to any of claims 1 to 3, **characterised in that** the protected protein is derived from soya bean meal.

5. A composition according to any of claims 1 to 4, **characterised in that** the proportion of protected protein is between 7% and 14%.

6. A composition according to any of the preceding claims, **characterised in that** the composition includes molasses, protected oils, soya bean meal, minerals and/or protected minerals.

7. A method of feeding a ruminant animal, **characterised in that** the method includes the step of providing the animal with access to a composition, the composition being in accordance with any of the preceding claims.

8. A method according to claim 7, **characterised in that** the ruminant animal is pregnant, and that access is provided during the last six weeks of pregnancy.

9. A method according to claims 7 or 8, **characterised in that** the composition is provided to the animal in the form of a block.

10. A method according to any of claims 7 to 9, **characterised in that** the composition is suitable for an ewe, and that the ewe consumes between 100 and 200g of the composition per day.

11. A method according to any of claims 7 to 9, **characterised in that** the composition is suitable for a cow, and that the cow consumes between 150g and 250g of the composition per day.

12. A use of a composition in improving colostrum from a ruminant animal, the composition being according to any of claims 1 to 6.

## Patentansprüche

1. Tierfutter-Zusammensetzung, welche das Kolostrum von Wiederkäuern verbessert, zur Fütterung trächtiger Tiere; wobei die Zusammensetzung einen ersten Bestandteil enthält, welcher bei seiner Verwendung die Produktion von Antikörpern stimuliert, wobei der erste Bestandteil Mannan-Oligosaccharid enthält; wobei die Zusammensetzung einen weiteren Bestandteil enthält, welcher bei seiner Verwendung die Verfügbarkeit von Protein steigert und einen zweiten Bestandteil enthält, welcher bei seiner Verwendung die Menge an mikrobiellem Protein steigert, das von dem Tier produziert wird, wobei der zweite Bestandteil Lactose enthält, **dadurch gekennzeichnet, dass** der weitere Bestandteil einen dritten Bestandteil enthält, welcher bei seiner Verwendung die Menge an Protein steigert, das nach dem Pansen für die Verdauung verfügbar ist, wobei der dritte Bestandteil ein geschütztes Protein enthält.

2. Zusammensetzung nach Anspruch 1, **dadurch gekennzeichnet, dass** der Anteil an Mannan-Oligosaccharid in der Zusammensetzung zwischen 1% und 3% beträgt.

3. Zusammensetzung nach Anspruch 1 oder 2, **dadurch gekennzeichnet, dass** der Anteil an Lactose in der Zusammensetzung zwischen 1% und 10% beträgt.

4. Zusammensetzung nach einem der Ansprüche 1 bis 3, **dadurch gekennzeichnet, dass** das geschützte Protein ein Sojabohnenmehl-Derivat ist.

5. Zusammensetzung nach Anspruch 1 bis 4, **dadurch gekennzeichnet, dass** der Anteil an geschütztem Protein in der Zusammensetzung zwischen 7% und 14% beträgt.

6. Zusammensetzung nach einem der vorhergehenden Ansprüche, **dadurch gekennzeichnet, dass** die Zusammensetzung Molassen, geschützte Öle, Sojabohnenmehl, Mineralien und/oder geschützte Mineralien enthält.

7. Verfahren zum Füttern von Wiederkäuern, **dadurch gekennzeichnet, dass** das Verfahren einen Schritt enthält, bei welchem dem Wiederkäuer der Zugang zu einer Zusammensetzung gemäss einem der vorhergehenden Ansprüche ermöglicht wird.

8. Verfahren nach Anspruch 7, **dadurch gekennzeichnet, dass** der Wiederkäuer trächtig ist und dass der Zugang während der letzten sechs Wochen der Trächtigkeit ermöglicht wird.

9. Verfahren nach Anspruch 7 oder 8, **dadurch gekennzeichnet, dass** die Zusammensetzung dem Tier in Form eines Blocks zur Verfügung gestellt wird.

10. Verfahren nach einem der Ansprüche 7 bis 9, **dadurch gekennzeichnet, dass** die Zusammensetzung für ein Mutterschaf geeignet ist und dass das Mutterschaf zwischen 100g und 200g der Zusammensetzung pro Tag konsumiert.

11. Verfahren nach einem der Ansprüche 7 bis 9, **dadurch gekennzeichnet, dass** die Zusammensetzung für eine Kuh geeignet ist und dass die Kuh zwischen 150g und 250g der Zusammensetzung pro Tag konsumiert.

12. Verwendung einer Zusammensetzung zur Verbesserung von Kolostrum von einem Wiederkäuer, wobei die Zusammensetzung eine solche gemäss einem der Ansprüche 1 bis 6 ist.

## Revendications

1. Composition alimentaire améliorant le colostrum d'un ruminant, destinée à l'alimentation des animaux gravides, la composition comprenant un premier ingrédient qui lors de son utilisation stimule la production d'anticorps, le premier ingrédient comprenant de l'oligosaccharide mannane, la composition comprenant un autre ingrédient qui lors de son utilisation accroît la disponibilité des protéines, l'autre ingrédient comprenant un deuxième ingrédient qui lors de son utilisation augmente la quantité des protéines microbiennes produites par l'animal, le deuxième ingrédient comprenant du lactose, **caractérisé en ce que** l'autre ingrédient comprend un troisième ingrédient, qui lors de son utilisation augmente la quantité de protéines disponibles pour la digestion après le rumen, le troisième ingrédient comprenant une protéine protégée.

2. Composition selon la revendication 1, **caractérisée en ce que** la proportion d'oligosaccharide mannane dans la composition se situe entre 1 % et 3 %.

3. Composition selon les revendications 1 ou 2, **caractérisée en ce que** la proportion de lactose dans la composition se situe entre 1 % et 10 %.

4. Composition selon l'une quelconque des revendications 1 à 3, **caractérisée en ce que** la protéine protégée est dérivée de farine de soja.

5. Composition selon l'une quelconque des revendications 1 à 4, **caractérisée en ce que** la proportion de protéine protégée se situe entre 7 % et 14 %.

6. Composition selon l'une quelconque des revendications précédentes, **caractérisée en ce que** la composition comprend de la mélasse, des huiles protégées, de la farine de soja, des minéraux et/ou des minéraux protégés.

7. Procédé pour alimenter un ruminant, **caractérisé en ce que** le procédé comprend l'étape consistant à donner accès à l'animal à une composition, la composition étant en accord avec l'une quelconque des revendications précédentes.

8. Procédé selon la revendication 7, **caractérisé en ce que** le ruminant est gravide, et **en ce que** l'accès est prévu pendant les six dernières semaines de la gestation.

9. Procédé selon les revendications 7 ou 8, **caractérisé en ce que** la composition est fournie à l'animal sous la forme d'un bloc.

10. Procédé selon l'une quelconque des revendications 7 à 9, **caractérisé en ce que** la composition est adaptée pour une brebis, et **en ce que** la brebis consomme entre 100 g et 200 g de la composition par jour.

11. Procédé selon l'une quelconque des revendications 7 à 9, **caractérisé en ce que** la composition est adaptée pour une vache, et **en ce que** la vache consomme entre 150 g et 250 g de la composition par jour.

12. Utilisation d'une composition pour l'amélioration du colostrum d'un ruminant, la composition étant en accord avec l'une quelconque des revendications 1 à 6.
